(19) Europäisches Patentamt
European Patent Office
Office européen des brevets

(11) **EP 2 712 273 B1**

(12) **EUROPÄISCHE PATENTSCHRIFT**

(45) Veröffentlichungstag und Bekanntmachung des Hinweises auf die Patenterteilung:
**07.03.2018 Patentblatt 2018/10**

(51) Int Cl.:
*H05B 33/08* *(2006.01)*

(21) Anmeldenummer: **13185268.3**

(22) Anmeldetag: **20.09.2013**

(54) **Mehrkanalige Stromquelle mit Serie- und Zweig-dimmschalter in jedem Kanal**

Multichannel current source having series and shunt dimming switch in each channel

Source de courant multi canal avec interrupteur de gradation de lumière shunt et serie en chaque canal

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2012 DE 102012108965**

(43) Veröffentlichungstag der Anmeldung:
**26.03.2014 Patentblatt 2014/13**

(73) Patentinhaber: **exscitron GmbH**
**09112 Chemnitz (DE)**

(72) Erfinder:
• **Gruber, Stephan**
**09112 Chemnitz (DE)**
• **Franzky, René**
**09113 Chemnitz (DE)**
• **Beyer, Winfried**
**09116 Chemnitz (DE)**
• **Meyhöfer, Gerd**
**01465 Dresden (DE)**

(74) Vertreter: **Keilitz, Wolfgang**
**Patentanwälte Keilitz & Partner, Partnerschaft**
**Nigerstrasse 4**
**81675 München (DE)**

(56) Entgegenhaltungen:
DE-A1-102005 056 338 US-A1- 2012 098 442

EP 2 712 273 B1

**Beschreibung**

Die Erfindung betrifft eine Stromquelle mit mehreren Ausgängen zum Anschließen einer elektrischen Last gemäß dem Oberbegriff des Patentanspruchs 1.

Aus dem Stand der Technik sind geregelte Stromquellen in den unterschiedlichsten Ausführungen bekannt, darunter auch dimmbare Ausführungen, mit denen die Ausgangsleistung nach Wunsch eingestellt werden kann. Die US 7,659,673 B2 offenbart z.B. eine mehrkanalige Stromquelle zum Betreiben verschiedenfarbiger LED-Stränge. Jeder der LED-Stränge hat einen eigenen Stromregler zum Regeln des durch den jeweiligen Strang fließenden Stroms. In jedem der LED-Stränge ist ferner ein steuerbarer Schalter angeordnet, der mittels eines PWM-Signals angesteuert wird und mit Hilfe dessen die einzelnen LED-Stränge gedimmt werden können.

Weitere Konstantstromquellen mit mehreren Ausgängen sind beispielsweise aus der DE 10 2010 048 951 A1 der Anmelderin, der WO 2007/039862 A2, der EP 0 788 850 B1 oder der US 2012/098442 A1 bekannt.

Die DE 10 2005 056338 A1 offenbart ferner eine geschaltete Spannungsquelle mit mehreren Ausgängen, die jeweils mittels einer einzigen Dimmvorrichtung gedimmt werden. Die einzelnen Schalter sind dabei in Serie zum Ausgang geschaltet.

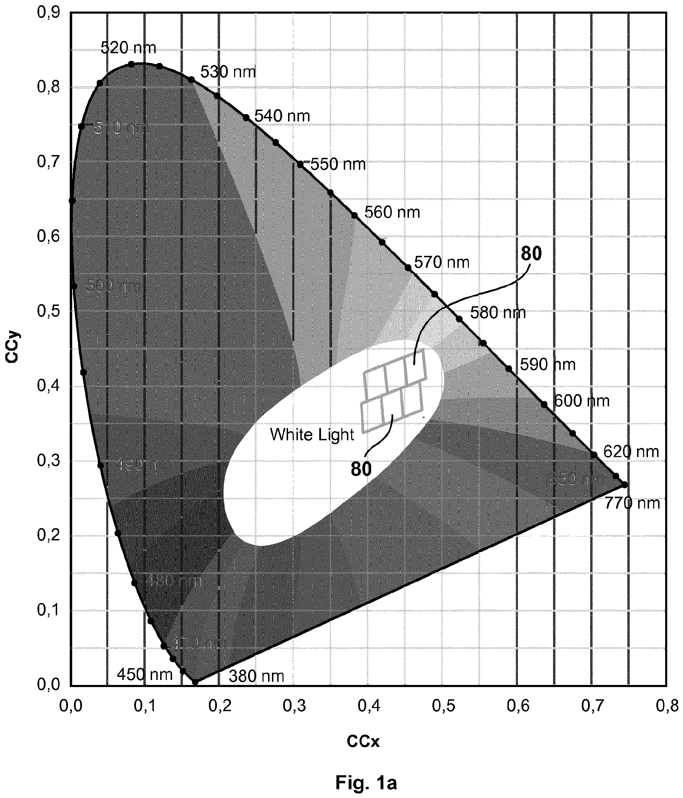

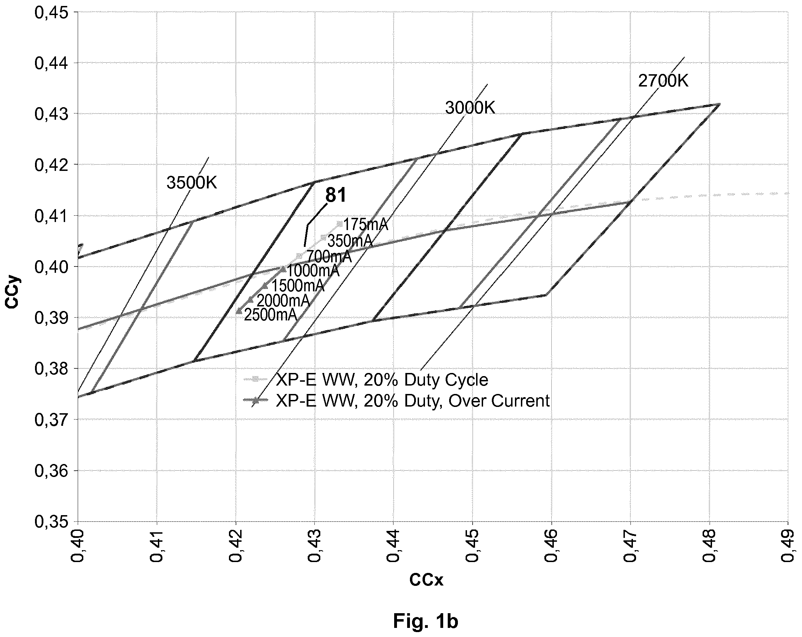

Dimmbare Konstantstromquellen werden häufig zum Betreiben von Lichtsystemen eingesetzt, die eine Vielzahl von Leuchtmitteln, insbesondere LEDs unterschiedlicher Farben aufweisen. Durch Farbmischung der einzelnen Grundfarben - im RGB-Farbraum sind dies rot, grün und blau - kann eine Vielzahl sichtbarer Farben dargestellt werden. Hierzu ist es erforderlich, dass die unterschiedlichen Ausgänge bzw. Kanäle der Konstantstromquelle unabhängig voneinander gedimmt werden können. Wie vorstehend erwähnt, gibt es im Stand der Technik eine ganze Reihe von mehrkanaligen Konstantstromquellen, deren einzelne Kanäle individuell dimmbar sind. Bei diesen Stromquellen tritt jedoch das Problem auf, dass sich mit einer Zu- oder Abnahme des Stroms in den einzelnen Kanälen auch der Farbort des ausgestrahlten Lichts im Farbraum verändert. Die Drift des Farbortes im Farbraum wird im Nachfolgenden anhand der Figuren 1a und 1b kurz erläutert.

Fig. 1a zeigt eine CIE-Normalfarbtafel, die alle von einem Beobachter wahrnehmbaren Farben darstellt. In der Mitte der CIE-Farbtafel wird das von den drei Farbstrahlern ausgestrahlte Licht als weiß wahrgenommen, da sich die drei Grundfarben mit etwa gleichgroßen Anteilen mischen. Der im Weißbereich rechts oben dargestellte Ausschnitt 80 ist in Fig. 1b nochmals vergrößert dargestellt.

In Fig. 1b ist der Farbort einer so genannten XLamp, einer speziellen Art von LED der Firma Cree, in Abhängigkeit von dem durch die LED fließenden Strom eingetragen. Der Betriebsstrom liegt dabei zwischen 175 mA und 2500 mA. Wie zu erkennen ist, verschiebt sich mit der Stromstärke der Farbort und damit auch die Wellenlänge des ausgestrahlten Lichts. Darüber hinaus verschiebt sich mit der Stromstärke des Konstantstroms auch die Farbtemperatur. Das Dimmen der LED hat somit den Effekt, dass sich der Blau-, Rot- oder Grünanteil des ausgestrahlten Lichts verändert und die LED somit je nach Dimmeinstellung einen wahrnehmbar anderen Farbton aufweist. Bei einem Lichtsystem, das in RGB-Technik aufgebaut ist, bewirkt das Konstantstrom-Dimmen der LEDs eine geringfügige Farbverschiebung des vom Beobachter wahrgenommenen Lichts. Dies ist bei vielen Anwendungen nicht erwünscht.

Aus der US 8 044 609 B2, der DE 10 2010 031 236 A1, der US 2012/0200229 A1 oder der US 2006/0255753 A1 ist jeweils eine Stromquelle mit mehreren Ausgängen bekannt, die an jedem Ausgang einen Gleichstrom zum Betreiben einer elektrischen Last bereitstellt, wobei die einzelnen Ausgänge mittels einer zugehörigen Dimmvorrichtung individuell gedimmt werden können. Wenn an den Ausgängen LEDs angeschlossen sind, führt das Konstantstrom-Dimmen jedoch wiederum zu einer Farbortverschiebung des von den LEDs ausgestrahlten Lichts. Es ist somit die Aufgabe der vorliegenden Erfindung, eine mehrkanalige, dimmbare Konstantstromquelle zu schaffen, mit der verschiedene Leuchtmittel, insbesondere LEDs, mit einer möglichst geringen Farbortdrift gedimmt werden können.

Gelöst wird diese Aufgabe der Erfindung durch die im Patentanspruch 1 angegebenen Merkmale. Weitere Ausführungsformen der Erfindung ergeben sich aus den Unteransprüchen.

Gemäß der Erfindung wird eine dimmbare Konstantstromquelle mit mehreren Ausgängen zum Anschließen einer elektrischen Last vorgeschlagen, die für jeden Ausgang eine separat einstellbare erste Dimmvorrichtung aufweist, mit der ein Teil des zum jeweiligen Ausgang fließenden Stroms gegen ein Referenzpotential abgeleitet werden kann und die jeweils einen ersten Schalter umfasst, der mittels eines ersten PWM-Signals angesteuert wird. Darüber hinaus umfasst die erfindungsgemäße Stromquelle für jeden Ausgang auch jeweils eine eigene zweite Dimmvorrichtung mit einem zweiten Schalter, der mittels eines zweiten PWM-Signals angesteuert wird. Durch die elektrische Last fließt somit ein pulsweitenmodulierter Strom. Dieser Strom ist im Wesentlichen rechteckförmig und springt zwischen einem Maximalwert (high level) und einem Minimalwert (low level) hin und her. Der Maximalwert bestimmt dabei maßgeblich die Lage des Farbortes des von einem Leuchtmittel abgestrahlten Lichts. Durch eine geeignete Abstimmung der Tastverhältnisse des ersten und zweiten PWM-Signals kann der Maximalwert des am Ausgang bereitgestellten pulsweitenmodulierten Stroms beeinflusst und im besten Fall konstant gehalten werden. Es ist daher möglich, die Farbortdrift des von einem Leuchtmittel abgestrahlten Lichts zu eliminieren.

Jeder Ausgang der Konstantstromquelle umfasst gemäß der Erfindung eine dem jeweiligen Ausgang ausschließlich zugeordnete erste und eine dem Ausgang ausschließlich zugeordnete zweite Dimmvorrichtung, wie vorstehend beschrieben wurde. Die einzelnen Dimmvorrichtungen als auch die einzelnen Ausgänge sind individuell, d.h. unabhängig voneinander, ansteuerbar bzw. dimmbar.

Als Schalter im Sinne der Erfindung ist jegliche Schaltvorrichtung zu verstehen, die ein oder mehrere Schaltelemente, wie z.B. in Serie oder parallel geschaltete Transistoren, aufweist.

Der zweite Schalter der zweiten Dimmvorrichtung ist vorzugsweise jeweils in Serie zur elektrischen Last angeschlossen. Die zweite Dimmvorrichtung mit dem zweiten Schalter könnte aber auch parallel zu Last angeschlossen sein.

Die erfindungsgemäße PWM-dimmbare Konstantstromquelle umfasst vorzugsweise eine Steuereinheit, die in Abhängigkeit von einer an einer ersten oder zweiten Dimmvorrichtung vorgenommenen Dimmeinstellung den Schalter der anderen Dimmvorrichtung desselben Ausgangs automatisch ansteuert, und zwar vorzugsweise so, dass die Farbortverschiebung möglichst gering ist. Die Steuereinheit ist hierzu direkt oder indirekt mit den Dimmvorrichtungen verbunden.

Gemäß einer bevorzugten Ausführungsform der Erfindung umfasst die Steuereinheit einen Algorithmus, der die Tastverhältnisse des ersten bzw. zweiten PWM-Signals so einstellt, dass der Maximalwert des durch die am Ausgang angeschlossene elektrische Last fließenden Stroms beim Dimmen im Wesentlichen konstant bleibt. Der Maximalwert schwankt über den gesamten Dimmbereich vorzugsweise um weniger als 5% und insbesondere weniger als 1%.

Bei der erfindungsgemäßen Konstantstromquelle handelt es sich vorzugsweise um eine geregelte Stromquelle, die an ihren Ausgängen einen festen Strom bereitstellt.

Gemäß einer Ausführungsform der Erfindung umfasst die erfindungsgemäße dimmbare Konstantstromquelle ein von einem Benutzer betätigbares Bedienelement zum Dimmen jeweils eines Ausgangs einzeln, oder mehrerer Ausgänge gleichzeitig. Vorzugsweise ist jeder Kanal individuell dimmbar. Das Betätigungselement kann beispielsweise in Hardware oder Software z.B. als Schieberegler oder Drehregler ausgeführt sein. Zum Dimmen eines Ausgangs kann ein Benutzer grundsätzlich die erste oder zweite Dimmvorrichtung des jeweiligen Ausgangs betätigen. Vorzugsweise ist die Konstantstromquelle so ausgelegt, dass durch Betätigen eines Bedienelements die zweite Dimmvorrichtung angesprochen wird. Jede Dimmeinstellung wird dann signaltechnisch in ein bestimmtes Tastverhältnis umgesetzt, mit dem der Schalter der ersten bzw. zweiten Dimmvorrichtung des betreffenden Kanals von der Steuereinheit angesteuert wird. Die Steuereinheit ermittelt dann in Abhängigkeit von der Dimmeinstellung automatisch das zugehörige Tastverhältnis für den Schalter der anderen Dimmvorrichtung. Bei einer geeigneten Abstimmung der beiden Tastverhältnisse kann erreicht werden, dass der Maximalwert des durch die Last fließenden, pulsweitenmodulierten Stroms im Wesentlichen konstant bleibt. Entsprechend ist auch die Farbortverschiebung minimal.

Die Steuereinheit kann das Tastverhältnis des ersten oder zweiten PWM-Signals z.B. auf Basis folgender Gleichung berechnen:

$$(1-D_{KS}) \times I_{Strang} = D_{PWM} \times I_{led}$$

wobei $I_{Strang}$ der Maximalwert des von der Stromquelle (47) an einem Ausgang (CH1, CH2) bereitgestellten Stroms,
$D_{KS}$ das Tastverhältnis des ersten PWM-Signals,
$D_{PWM}$ das Tastverhältnis des zweiten PWM-Signals, und
$I_{led}$ der Maximalwert des durch eine Last (10,20) fließenden, pulsweitenmodulierten Stroms ist.

Auf Basis der vorstehend genannten Gleichung könnte aber auch eine Tabelle ("Look-up-Table") oder ein Kennfeld angelegt werden, das in diesem Fall von der Steuereinheit nur ausgelesen werden müsste. Eine Berechnung des Tastverhältnisses wäre dann nicht erforderlich.

Gemäß einer bevorzugten Ausführungsform der Erfindung steuert die Steuereinheit die Schalter der ersten und zweiten Dimmvorrichtung vorzugsweise wenigstens teilweise gegenphasig, insbesondere vollständig gegenphasig. Wenn das PWM-Signal des ersten Schalters z. B. in den Zustand low geht, springt das PWM-Singal des zweiten Schalters im selben Moment z. B. in den Zustand high. Dadurch kann die Spannungswelligkeit und somit auch die Welligkeit des Ausgangsstroms gering gehalten werden.

Die erfindungsgemäße mehrkanalige, dimmbare Konstantstromquelle wird vorzugsweise zum Treiben von Leuchtmitteln, insbesondere LEDs unterschiedlicher Farben verwendet. An den einzelnen Ausgängen sind vorzugsweise jeweils ein oder mehrere Leuchtmittel in Serie angeschlossen. Die in einem Strang enthaltenen Leuchtmittel haben vorzugsweise alle die gleiche Farbe.

Die erste Dimmvorrichtung ist vorzugsweise in einer zu einem Ausgang führenden Leitung, in der die Stromquelle einen vorgegebenen Strom bereitstellt, an einem Knoten angeschlossen und gegen ein Referenzpotential verschaltet. Durch Schließen des Schalters wird der von der Stromquelle bereitgestellte Strom gegen das Referenzpotential abgeleitet. Bei offenem Schalter dagegen fließt der Strom zum jeweiligen Ausgang weiter und treibt die dort angeschlossene elektrische Last.

Gemäß einer speziellen Ausführungsform der Erfindung kann die von der Stromquelle aufgenommene elektrische Leistung an die tatsächlich an den Ausgängen benötigte Leistung angepasst werden. Wenn beispielsweise sämtliche Kanäle der Stromquelle stark gedimmt sind, ist es nicht erforderlich, die volle Ausgangsleistung bereit zu stellen. Durch eine Reduktion der Eingangsleistung der Stromquelle (und folglich des an den Ausgängen bereitgestellten Stroms) kann somit der Wirkungsgrad der Stromquelle verbessert werden. Um die Ausgangsleistung entsprechend dem Bedarf anzupassen, ist vorzugsweise ein Stromregler vorgesehen, der z. B. die Eingangsleistung oder den Eingangsstrom der Stromquelle regelt (die Regelgröße kann aber auch eine andere Größe sein). Außerdem wird die an den einzelnen Ausgängen jeweils bereitgestellte elektrische Leistung, oder eine dazu äquivalente Größe, wie z.B. ein Tastverhältnis des ersten PWM-Signals, ermittelt. Wenn die benötigte Ausgangsleistung bzw. der Ausgangsstrom an keinem der Ausgänge größer ist als ein vorgegebener Schwellenwert, gibt die Steuereinheit dem Stromregler z. B. einen kleineren Strom-Sollwert vor, so dass die Stromquelle eine geringere Ausgangsleistung erzeugt. Im umgekehrten Fall, wenn an wenigstens einem der Ausgänge eine sehr hohe elektrische Leistung abgerufen wird, kann die Ausgangsleistung der Stromquelle auch erhöht werden. Das Tastverhältnis des jeweils ersten PWM-Signals ist ein Maß für die Höhe der am zugehörigen Ausgang verbrauchten elektrischen Leistung und kann daher zur Überwachung und Einstellung der von der Stromquelle bereitgestellten Ausgangsleistung bzw. des Ausgangsstroms genutzt werden.

Zur Einstellung der Leistung der Stromquelle kann der Stromregler z.B. mit einem Stromsteller verbunden sein, mittels dessen der primärseitig in die Stromquelle eingespeiste Strom eingestellt werden kann. Der Stromsteller kann beispielsweise in LLC-Technik aufgebaut sein und z.B. einen high-side- und einen low-side-Schalter mit entsprechendem Controller umfassen.

Die erfindungsgemäße dimmbare Konstantstromquelle umfasst vorzugsweise für jeden Ausgang einen Gleichrichter, mit dem der am Ausgang bereitgestellte Strom gleichgerichtet wird. Der Gleichrichter kann beispielsweise eine oder mehrere Dioden umfassen, die vorzugsweise an einem zum Ausgang führenden Ast vorgesehen ist bzw. sind. Der Gleichrichter ist vorzugsweise ausgangsseitig der ersten und eingangsseitig der zweiten Dimmvorrichtung, also zwischen der ersten und zweiten Dimmvorrichtung, angeordnet.

Die erfindungsgemäße dimmbare Konstantstromquelle umfasst vorzugsweise auch für jeden Ausgang einen Filter zum Filtern und Glätten des Ausgangsstroms. Der Filter ist vorzugsweise ausgangsseitig der ersten Dimmvorrichtung angeordnet und dem Gleichrichter vorzugsweise nachgeschaltet. Der Filter kann beispielsweise einen Kondensator umfassen, der beispielsweise zwischen einem Knoten in einer zum Ausgang führenden Leitung und einem Referenzpotential angeordnet ist.

Beide Dimmvorrichtungen eines Ausgangs sind vorzugsweise auf der Sekundärseite eines Transformators angeordnet, der einen Konstantstrom bereitstellt.

Die Dimmvorrichtungen werden vorzugsweise rein gesteuert (open loop) und nicht geregelt (closed loop) betrieben.

Gemäß einer bevorzugten Ausführungsform der Erfindung umfasst die dimmbare, mehrkanalige Stromquelle:

- einen Haupttransformator mit wenigstens zwei Sekundärwicklungen, der von einem Wechselstrom mit einer vorgegebenen Frequenz gespeist wird,
- wenigstens einen sekundärseitigen ersten Schaltungszweig, in dem während der positiven Halbwelle, und einen sekundärseitigen zweiten Schaltungszweig, in dem während der negativen Halbwelle des Speisestroms ein Strom getrieben wird,
- wobei der erste und der zweite Schaltungszweig jeweils ein zueinander gegensinnig gewickeltes und magnetisch zusammenwirkendes Drosselpaar aufweist, und
- wobei eine erste Drossel eines Drosselpaares mit einem ersten Ausgang und eine zweite Drossel desselben Drosselpaares mit einem zweiten Ausgang verbunden ist.

Die Drosseln des ersten und zweiten Drosselpaares sind vorzugsweise magnetisch miteinander gekoppelt und z.B. auf einem gemeinsamen magnetischen Kern angeordnet.

Die Wicklungen eines Drosselpaares sind vorzugsweise jeweils gegensinnig gewickelt.

Eine erste Drossel zweier Drosselpaare ist vorzugsweise jeweils mit einem ersten Ausgang, und eine zweite Drossel der Drosselpaare jeweils mit einem zweiten Ausgang verbunden (direkt oder indirekt).

Den einzelnen Drosseln eines Drosselpaares können jeweils ein oder mehrere weitere Drosselpaare nachgeschaltet sein.

Die Erfindung wird nachstehend anhand der beigefügten Zeichnungen beispielhaft näher erläutert. Es zeigt:

Fig. 1a    eine CIE-Farbtafel zur Darstellung des wahrnehmbaren Spektrums;

Fig. 1b    einen vergrößerten Teilbereich der CIE-Farbtafel von Fig. 1a;

Fig. 2      ein Ausführungsbeispiel einer mehrkanaligen dimmbaren Gleichstromquelle, bei der für jeden Kanal zwei Dimmvorrichtungen vorgesehen sind;

Fig. 3      den zeitlichen Verlauf verschiedener Stromsignale in der Schaltung von Fig. 2;

Fig. 4      den zeitlichen Verlauf verschiedener PWM-Signale, mit denen die Schalter der ersten und zweiten Dimmvorrichtung angesteuert werden, sowie den zeitlichen Verlauf des pulsweitenmodulierten Stroms bei einer gegenphasigen Ansteuerung der Schalter;

Fig. 5      den zeitlichen Verlauf verschiedene PWM-Signale, mit denen die Schalter der ersten und zweiten Dimmvorrichtung angesteuert werden, sowie den zeitlichen Verlauf des pulsweitenmodulierten Stroms bei einer gleichphasigen Ansteuerung der Schalter;

Fig. 6      eine Gesamtansicht einer erfindungsgemäßen dimmbaren, mehrkanaligen Stromquelle gemäß einer speziellen Ausführungsform der Erfindung;

Fig. 7      eine vergrößerte Ansicht eines Ausgangs der Stromquelle nach Fig. 2; und

Fig. 8      ein Verfahren zum Betreiben der Stromquelle von Fig. 6 gemäß einer Ausführungsform der Erfindung.

Bezüglich der Erläuterung der Figuren 1a und 1b wird auf die Beschreibungseinleitung verwiesen.

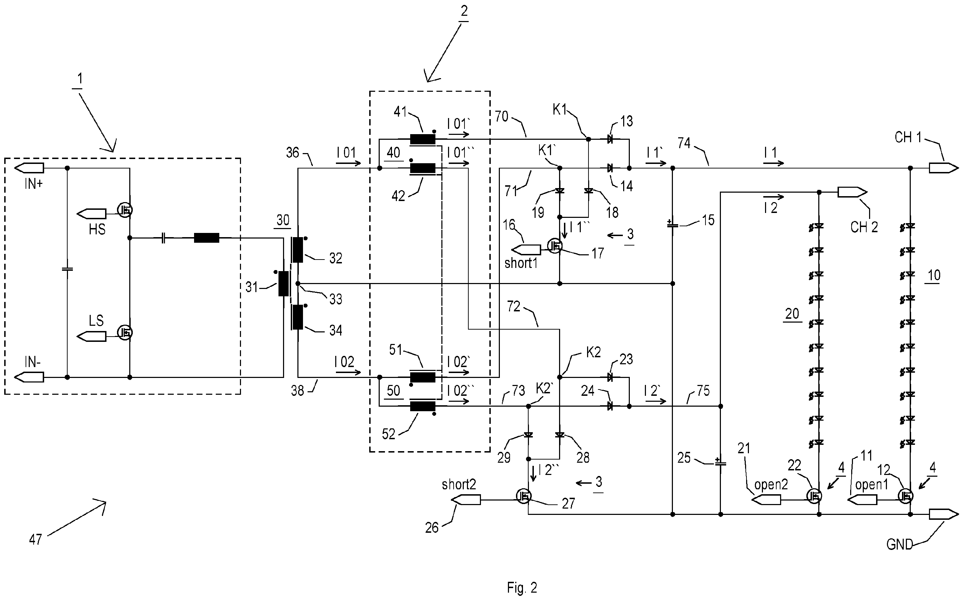

Fig. 2 zeigt ein schematisches Schaltbild einer mehrkanaligen, dimmbaren Stromquelle 47, mit insgesamt zwei Ausgängen CH1, CH2. Die Stromquelle 47 liefert an jedem der Ausgänge CH1, CH2 einen von der Ausgangslast unabhängigen, geregelten Strom. Jeder der Ausgänge CH1, CH2 ist über eine zugehörige erste Dimmvorrichtung 3 und eine zugehörige zweite Dimmvorrichtung 4 individuell dimmbar.

An den einzelnen Ausgängen CH1, CH2 können grundsätzlich beliebige elektrische Verbraucher angeschlossen sein. Die erfindungsgemäße, mehrkanalige Stromquelle wird jedoch vorzugsweise zum Betreiben von LEDs unterschiedlicher Farben verwendet.

In der in Fig. 2 dargestellten Ausführungsform ist an den Ausgängen CH1, CH2 jeweils ein LED-Strang 10 bzw. 20 angeschlossen. Jeder LED-Strang weist dabei mehrere - hier zehn - in Serie geschaltete LEDs auf. Die einzelnen LEDs eines LED Strangs 10, 20 haben vorzugsweise die gleiche Farbe und können z.B. rot, grün oder blau sein. Durch Farbenmischung des von den LEDs ausgestrahlten Lichts wird schließlich eine Mischfarbe erzeugt, die vom Betrachter wahrgenommen wird.

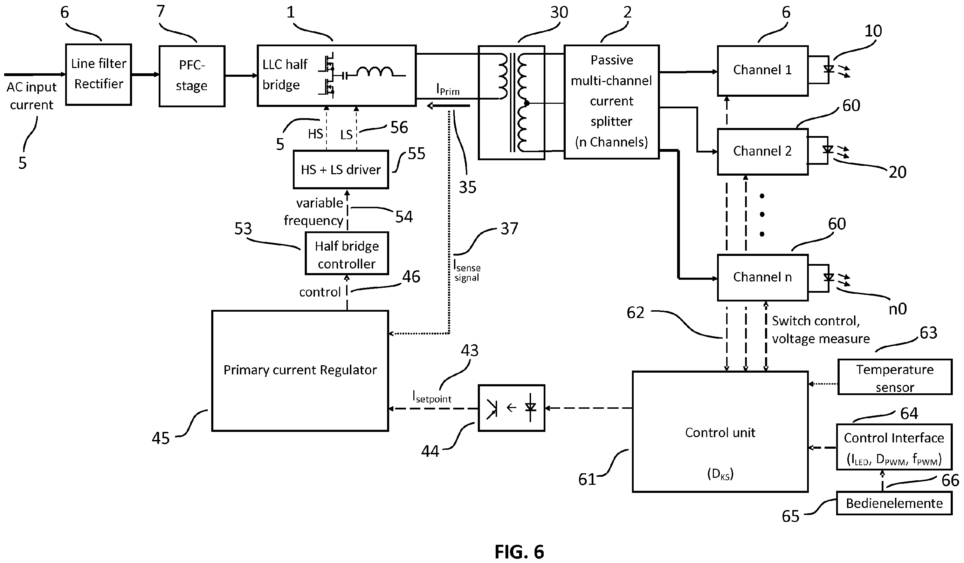

Die in Fig. 2 dargestellte dimmbare Konstantstromquelle umfasst ferner einen Haupttransformator 30, der von einem hier nicht näher beschriebenen primären Schaltungsteil 1 mit einem Wechselstrom mit einem geregelten Stromanteil gespeist wird. Der primäre Schaltungsteil kann beispielsweise in LLC-Technik aufgebaut sein, wie sie z. B. aus der US 2010/016,440 A1 (Figur 6) bekannt ist. Der Haupttransformator 30 hat weiterhin zwei Sekundärwicklungen 32, 34, die über eine Mittenanzapfung 33 in Reihe verschaltet sind. Die Mittenanzapfung 33 ist dabei mit einem Referenzpotential - hier mit Masse - verbunden. In den von den Sekundärwicklungen 32, 34 gespeisten Schaltungszweigen 36, 38 fließt daher ein fest vorgegebener, bekannter Strom I01 bzw. I02. Einer der sekundärseitigen Schaltungszweige (z.B. Zweig 36) führt dabei den während der positiven Halbwelle und der andere Schaltungszweig (z.B. Zweig 38) den während der negativen Halbwelle der Speisespannung erzeugten Strom I01 bzw. I02. Die Ströme I01 und I02 werden dann mittels eines Stromteilers 2 auf die einzelnen Ausgänge CH1 und CH2 aufgeteilt.

Der Stromteiler 2 umfasst für jeden der sekundärseitigen Schaltungszweige 36 und 38 jeweils ein Drosselpaar 40, 50 mit je zwei zueinander gegensinnig gewickelten und magnetisch zusammenwirkenden Drossel 41, 42 bzw. 51, 52. Die beiden Drosselpaare 40, 50 sind dabei ebenfalls magnetisch miteinander gekoppelt und können sich z.B. auf einem gemeinsamen Kern befinden.

Jeweils eine der Drosseln - hier 41 und 51 - ist dabei mit dem ersten Ausgang CH1 und die jeweils andere Drossel - hier 42 und 52 - mit dem anderen Ausgang CH2 verbunden. Die Wicklungszahl der einzelnen Drosseln 41, 42, 51, 52 ist vorzugsweise identisch. In diesem Fall teilt sich der Strom I01 und I02 gleichmäßig auf die beiden Ausgänge CH1 und CH2 auf. Wenn der Strom I01 bzw. I02 beispielsweise 2 A beträgt, ist der Ausgangsstrom an den Ausgängen CH1 und CH2 jeweils 1A.

Zu den weiteren Details einer mehrkanaligen Stromquelle wird auf die WO 2011/047817 A9 der Anmelderin verwiesen, deren diesbezügliche Passagen hier durch Verweis in die Beschreibung aufgenommen werden.

Die erfindungsgemäße Stromquelle umfasst für jeden Ausgang CH1, CH2 außerdem eine separate erste Dimmvorrichtung 3, die hier jeweils an einem Knoten angeschlossen ist, der in einer zum Ausgang CH1 bzw. CH2 führenden Leitung 70-73, ausgangsseitig der Drosseln 41, 42, 51, 52, angeordnet ist. In den von den Drosseln 41, 42, 51, 52 zum Ausgang führenden Leitungen 70-73 ist außerdem jeweils ein Gleichrichter, im vorliegenden Fall eine Diode 13, 14, 23, 24 angeschlossen. Darüber hinaus umfasst die dimmbare, mehrkanalige Stromquelle 47 für jeden Ausgang CH1, CH2 auch einen Filter zum Filtern und Glätten des Ausgangsstroms I1, I2, wobei der Filter in diesem Fall einen Kondensator 15, 25 umfasst, der zwischen der jeweiligen Ausgangsleitung 74, 75 und einem Referenzpotential GND angeordnet ist.

Jede erste Dimmvorrichtung 3 enthält einen Schalter 17, 27, der an seinem jeweiligen Eingang 16 bzw. 26 mittels eines ersten PWM-Signals short1, short2 angesteuert wird. Die PWM-Signale short1, short2 können sich unterscheiden. Je nach Tastverhältnis $D_{KS}$ des PWM-Signals short1, short2 fließt ein mehr oder weniger großer Teil des von der Stromquelle 47 sekundärseitig bereitgestellten Stroms gegen das Referenzpotential (Masse) ab. Dieser Anteil ist gleichbedeutend mit einer Leistungsreduzierung der Stromquelle 47. Je nach Tastverhältnis $D_{KS}$ des PWM-Signals 16, 26 wird am Ausgang CH1 bzw. CH2 ein gewünschter Stromwert eingestellt. Der Ausgangsstrom I1' ($I_{DC}$) am Ausgang CH1 ergibt sich abhängig von dem von der Stromversorgung vorgegebenen Maximalstrom $I_{Strang}$ und dem Tastverhältnis $D_{KS}$ ($0 < D_{KS} < 1$) gemäß:

$$I1' = (1 - D_{KS}) \times I_{Strang}$$

Dabei ist $D_{KS} = 0$, wenn der Kurzschlussschalter 17, 27 immer offen ist und $D_{KS} = 1$, wenn der Kurzschlussschalter 17, 27 immer geschlossen ist. Die Frequenz des PWM-Signals short1, short2 kann z.B. zwischen 40 Hz und 10 kHz liegen, aber auch größer oder kleiner sein.

Für jeden Ausgang CH1, CH2 ist ferner eine zweite Dimmvorrichtung 4 vorgesehen, die jeweils einen zweiten Schalter 12, 22 umfasst, der mittels eines PWM-Signals open1, open2 angesteuert wird. Der Schalter 12, 22 ist dabei in Serie zur elektrischen Last 10, 20 geschaltet. Durch Änderung des Tastverhältnisses $D_{PWM}$ des PWM-Signals, mit dem die zweiten Schalter 12, 22 angesteuert werden, lässt sich der jeweilige Ausgang CH1, CH2 ebenfalls individuell dimmen. Die Schalter 12, 22 können beispielsweise Transistoren, wie z.B. MOS-Transistoren umfassen.

Bei der Verwendung der dimmbaren, mehrkanaligen Stromquelle 47 zum Betreiben eines Lichtsystems mit mehrfarbigen LEDs 10, 20 kann es, wie eingangs erwähnt, zu einer Verschiebung des Farbortes des von den LEDs 10, 20 ausgestrahlten Lichts kommen. Wie sich gezeigt hat, bestimmt der Maximalwert des pulsweitenmodulierten Ausgangsstroms I1, I2 maßgeblich die Lage des Farbortes des von einem Leuchtmittel abgestrahlten Lichts. Durch eine geeignete Abstimmung der Tastverhältnisse des ersten und zweiten PWM-Signals kann der Maximalwert des am Ausgang bereitgestellten pulsweitenmodulierten Stroms beeinflusst und im besten Fall konstant gehalten werden.

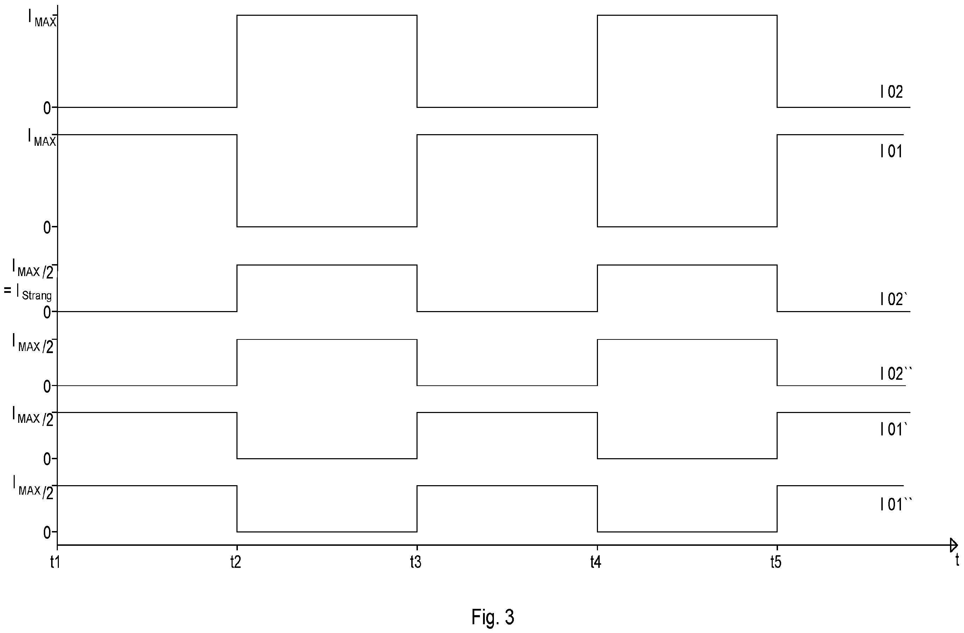

Fig. 3 zeigt den zeitlichen Verlauf verschiedener Ströme in der Stromquelle von Fig. 2. Durch die Reihenschaltung der Sekundärwicklungen 32, 34 sind die Ströme I01 und I02 genau gegenphasig, aber in ihrer Amplitude gleich ($I_{Max}$). Aufgrund der Polarität der Ausgangsgleichrichter 13, 14, 23, 24 fließt überall nur ein positiver Strom. Da der Strom I01 bzw. I02 jeweils von einem Drosselpaar 40 bzw. 50 mit gleichem Wicklungsverhältnis von 1:1 gleichmäßig aufgeteilt wird, fließt in den Wicklungen 41, 42 bzw. 51, 52 jeweils ein gleich großer Strom I01', I01" bzw. I02', I02". Man sieht in Fig. 3 deutlich, dass die Ströme I01' und I02' sowie I01" und I02" genauso gegenphasig sind, wie die von den Sekundärwicklungen eingespeisten Ströme I01 und I02, aber genau die halbe Amplitude $I_{Max} / 2$ aufweisen. Mit den Gleichrichtern 13, 14 wird aus den gegenphasigen Strömen I01' und I02' der Ausgangsstrom I1' für den ersten Ausgang CH1. Der Ausgangsstrom I2' für den zweiten Ausgang CH2 setzt sich aus den Teilströmen I01" und I02" zusammen. Die Ströme I1' und I2' werden dann jeweils von einem Filter - hier einem Kondensator 15 bzw. 25 - gefiltert und gemittelt und als I1 bzw. I2 an die angeschlossene LED-Last 10 bzw. 20 geleitet.

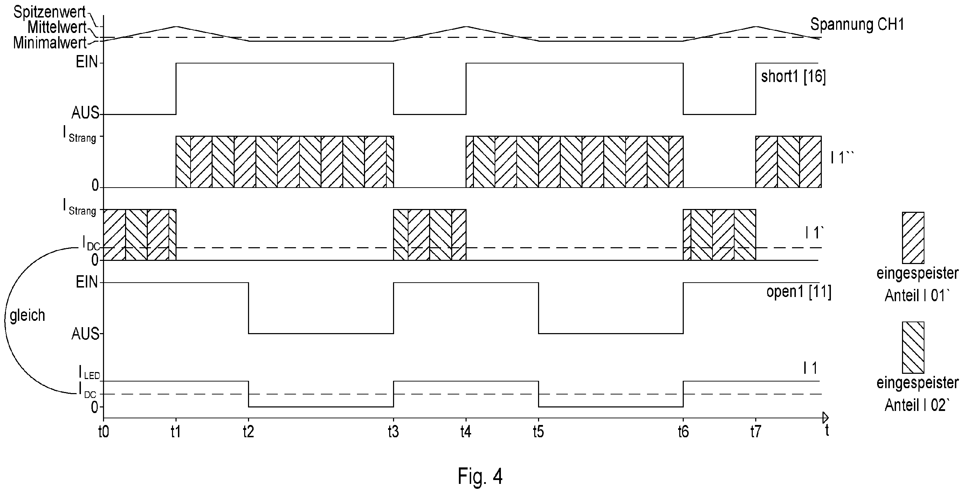

Fig. 4 zeigt den zeitlichen Verlauf der verschiedenen PWM-Signale short1, short2, open1, open2, mit denen die Schalter 17,27,12,22 der ersten und zweiten Dimmvorrichtung 3,4 angesteuert werden, sowie den zeitlichen Verlauf des pulsweitenmodulierten Stroms bei einer gegenphasigen Ansteuerung der Schalter. Ein high-Pegel (5V-15V) am PWM-Steuersignal short1 des ersten Schalters 17 schaltet den Schalter 17 ein. Dadurch werden die Teilströme I01' und I02' über Gleichrichtmittel 18,19 als ein Strom I1" durch den Schalter 17 zum Referenzpotential GND abgeleitet. Während der Schalter 17 aktiv ist, fließt also kein Strom I1' zum Ausgang. Ein low-Pegel (0 V) am Steuereingang 16 des Schalters 17 schaltet den Schalter 17 ab. Die Teilströme I01' und I02' fließen dann wieder über die Gleichrichter 13,14 als Strom I1' zum Ausgang CH1. Der Strom I1' schwankt damit zwischen einem Maximalwert $I_{Strang}$ und einem Minimalwert Null.

Aus dem Tastverhältnis $D_{KS}$ des PWM-Signals short1 und dem Maximalwert $I_{Strang}$ des Strom I1' ergibt sich der mittlere, zum Ausgang CH1 fließende Strom $I_{DC}$ (gemittelter Strom I1') als:

$$I_{DC} = (1 - D_{KS}) \times I_{Strang} \qquad (1)$$

Der gemittelte Strom $I_{DC}$ ist dabei in Fig. 4 als gestrichelte Linie dargestellt. Weiterhin ist durch unterschiedlich schraffierte Flächen dargestellt, wie sich die Ströme I1' und I1" aus den phasenverschobenen Teilströmen I01' und I02' zusammensetzen.

Der Schalter 12 der zweiten Dimmvorrichtung 4 wird mittels eines PWM-Signals open1 angesteuert. Ein high-Pegel schaltet den Schalter 12 wiederum ein und low-Pegel schaltet ihn aus, wodurch der durch die LEDs 10 fließende Strom I1 zu Null wird. Durch die LEDs 10 fließt somit ein pulsweitenmodulierter Strom I1.

Der durch die LEDs fließende mittlere Strom $I_{DC}$ ergibt sich aus dem Tastverhältnis $D_{PWM}$ des PWM-Signals open 1 und dem Maximalwert $I_{led}$ des durch die LEDs 10 fließenden Stroms I1 als:

$$I_{DC} = D_{PWM} \times I_{led} \qquad (2)$$

Der Strom $I_{DC}$ ist in Fig. 4 ebenfalls als gestrichelte Linie gezeigt. Der Maximalwert $I_{led}$ bestimmt dabei die Lage des Farbortes, während mit $D_{PWM}$ die Helligkeit eingestellt wird.

Im stabilen Zustand muss der mittlere Ladestrom in den Kondensator 15 gleich dem mittleren Endladestrom sein. Die beiden Mittelwerte $I_{DC}$ der Ströme I1 und I1' sind in diesem Fall gleich und es gilt:

$$(1 - D_{KS}) \times I_{Strang} = D_{PWM} \times I_{led} \qquad (3)$$

Stimmt dieses Gleichgewicht nicht, lädt sich der Kondensator immer weiter auf oder wird letztendlich komplett entladen. Bei konstanten Parametern $D_{KS}$, $D_{PWM}$ und $I_{Strang}$ stellt sich immer automatisch die richtige Spannung am Kondensator 15 ein, um $I_{led}$ zu treiben. Ist z.B. die Kondensatorspannung zu klein, um den vorgegebenen $I_{led}$ zu treiben, ist der Ladeanteil aus der Gleichung (1) größer und erhöht somit die Kondensatorspannung so lange, bis sich das Gleichgewicht aus Gleichung (3) einstellt. Ist die Kondensatorspannung dagegen zu groß, ist der Entladeanteil aus Gleichung (2) größer, und die Spannung, und damit einhergehend auch der LED-Strom sinken so lange, bis wieder ein Gleichgewicht herrscht. Dies ist möglich, da $I_{Strang}$ ein geregelter Konstantstrom ist.

Da $I_{Strang}$ durch den primären Schaltungsteil 1 vorgegeben ist, kann aus Gleichung (3) für jedes gewünschte $I_{led}$ und $D_{PWM}$ das nötige $D_{KS}$ (und umgekehrt) berechnet werden:

$$D_{KS} = 1 - \frac{D_{PWM} \times I_{led}}{I_{Strang}} \qquad (4)$$

Ein Tastverhältnis $D_{KS}$ von 1 heißt, dass der entsprechende Kanal CH1 bzw. CH2 abgeschaltet ist, mit $0 \leq D_{KS} \leq 1$.

Aus Gleichung (3) kann auch direkt der Strom $I_{Strang}$ bei vorgegebenem $D_{KS}$ errechnet werden.

$$I_{Strang} = \frac{D_{PWM}}{(1 - D_{KS})} \times I_{led} \qquad (5)$$

Wenn der Schalter 17 nicht angesteuert wird, also $D_{KS} = 0$ und der Schalter 12 der zweiten Dimmvorrichtung immer an ist, also $D_{PWM} = 1$, ist der LED-Strom I1 gleich dem von der Teilerstufe 2 gelieferten Strom I1', es gilt also $I_{led} = I_{Strang}$. Allgemein gilt dies immer, wenn Gleichung (6) erfüllt ist:

$$D_{PWM} = 1 - D_{KS} \qquad (6)$$

Das Tastverhältnis $D_{KS}$ sollte vorzugsweise kleiner als 1, besser kleiner als 0,9 sein, um bei dann relativ sehr großen Strömen $I_{Strang}$ nicht über die technischen Grenzen des gesamten Vorschaltgeräts hinaus zu gelangen.

Der Kondensator 15 wird vorzugsweise so dimensioniert, dass die Spannungswelligkeit am Ausgang CH1 (in Fig. 4 ganz oben dargestellt), verursacht durch die Ansteuerung der Schalter 17, 12 möglichst gering ist und insbesondere unterhalb einer vorgegebenen Schwelle liegt. Die kleinste Welligkeit tritt auf, wenn Gleichung (6) erfüllt ist und beide Schalter 17, 12 gegenphasig arbeiten. Einen Maximalwert der Spannungswelligkeit gibt es genau bei gleichphasiger Ansteuerung. Da im Regelfall aber Gleichung (6) nicht erfüllt ist, reicht es aus, dass die PWM-Signale short1 und open1 möglichst lange gegenphasig sind. Das PWM-Signal short1 kann z.B. ausgeschaltet werden, wenn das Signal open1 angeht, oder genau umgekehrt.

Die PWM-Signale short1 bzw. open1 der Schalter 17 bzw. 12 haben vorzugsweise die gleiche Frequenz, müssen dies aber nicht notwendigerweise. (z. B. kann die

Frequenz der ersten Dimmvorrichtung 10kHz, die der zweiten 50kHz sein) In diesem Fall wäre das gegenphasige Betreiben der Schalter relativ einfach zu bewerkstelligen.

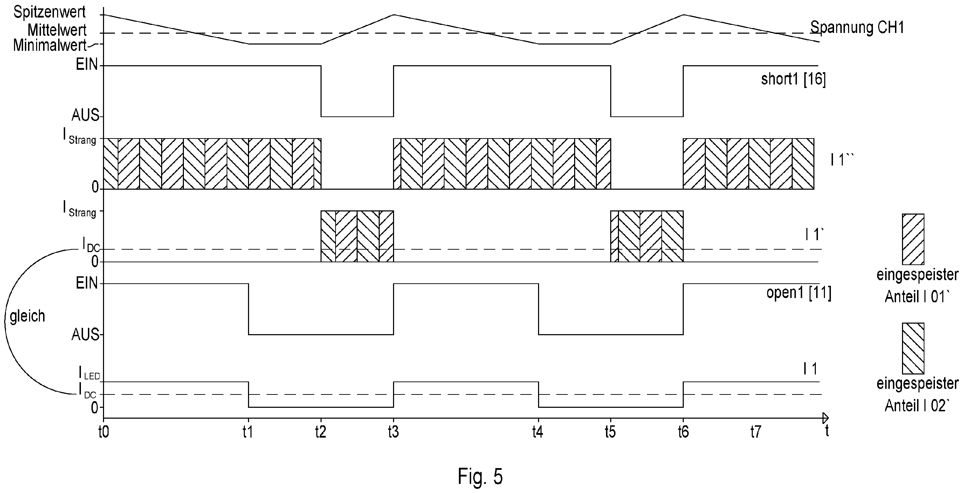

Fig. 5 zeigt die gleichen Signale wie Fig. 4, wobei die beiden Schalter 17 und 12 jedoch gleichphasig angesteuert werden. Wie an der Spannungskurve (ganz oben) zu erkennen ist, ist die Welligkeit der Spannung am Ausgang CH1 genau doppelt so groß wie in Fig. 4.

Dieselben Gleichungen und Zusammenhänge sind genauso auf den zweiten Ausgang CH2 und gegebenenfalls weitere Ausgänge anzuwenden.

Fig. 6 zeigt ein Blockschaltbild einer mehrkanaligen, dimmbaren Stromquelle 47 mit einer Steuereinheit 61 zur Ansteuerung der Schalter der ersten und zweiten Dimmvorrichtungen 3 bzw. 4. Zum Dimmen der einzelnen Ausgänge bzw. Kanäle 60 ist hier jeweils ein Bedienelement 65, wie z.B. ein Schieberegler, vorgesehen, der in Hardware oder Software ausgeführt sein kann. Die Ausgangssignale der Bedienelemente 65 werden über eine Schnittstelle 64 (z. B. DALI, DMX, o.ä.) an die Steuereinheit 61 übertragen. Die Dimmeinstellung der einzelnen Bedienelemente 65 wird dabei in ein Tastverhältnis $D_{PWM}$ für die Schalter der zweiten Dimmvorrichtungen 4 umgesetzt. Darüber hinaus erhält die Steuereinheit 61 den Maximalwert $I_{led}$ des Stroms Ix in den einzelnen Kanälen 60, wobei x = 1 ... n, entsprechend der Anzahl n der Kanäle.

Darüber hinaus wird der Steuereinheit 61 auch noch die Dimmfrequenz $f_{PWM}$ über die Schnitstelle 64 zugeführt. Die Steuereinheit 61 ermittelt dann auf Basis dieser Parameter für jeden Ausgang 60 ein Tastverhältnis $D_{KS}$ der jeweiligen ersten Dimmvorrichtung 3. Die einzelnen Tastverhältnisse $D_{KS}$ können beispielsweise gemäß der Gleichung (4) berechnet oder aus einer Tabelle bzw. einem Kennfeld ausgelesen werden.

Fig. 6 zeigt ferner ein Wechselstromnetz 5, aus dem das Gesamtsystem gespeist wird. Nach einer Filterung und Gleichrichtung in Block 6 folgt eine PFC-Stufe 7, um eine Ausgangswelligkeit mit der doppelten Netzfrequenz zu vermeiden. Eine LLC-Leistungsstufe 1 treibt dann den bereits beschriebenen Transformator 30.

Der in der Primärwicklung fließende Strom 35 wird z.B. mittels eines Stromtrafos in eine Spannung 37 gewandelt, welche den Ist-Wert eines primären Stromreglers 45 darstellt. Der Stromregler 45 steuert mittels eines Signals 76 einen Halbbrücken-Controller 53, der wiederum ein Signal 54 mit variabler Frequenz an einen Halbbrücken-Treiber 55 ausgibt, welcher den high-side-Transistor 57 und den low-side-Transistor 56 der LLC-Halbbrücke 1 abwechselnd ansteuert. Die Sekundärseite des Transformators 30 speist dann eine mehrkanalige passive Teilerstufe 2, wie sie beispielhaft in Fig. 2 dargestellt ist und ferner in der WO 2011/047817 A9 ausführlich beschrieben ist.

Optional kann noch die aktuelle Gerätetemperatur der Steuereinheit 61 mittels eines Temperatursensors 63 erfasst werden. Bei Überschreiten einer oberen Grenztemperatur kann die Stromquelle beispielsweise automatisch abgeschaltet werden.

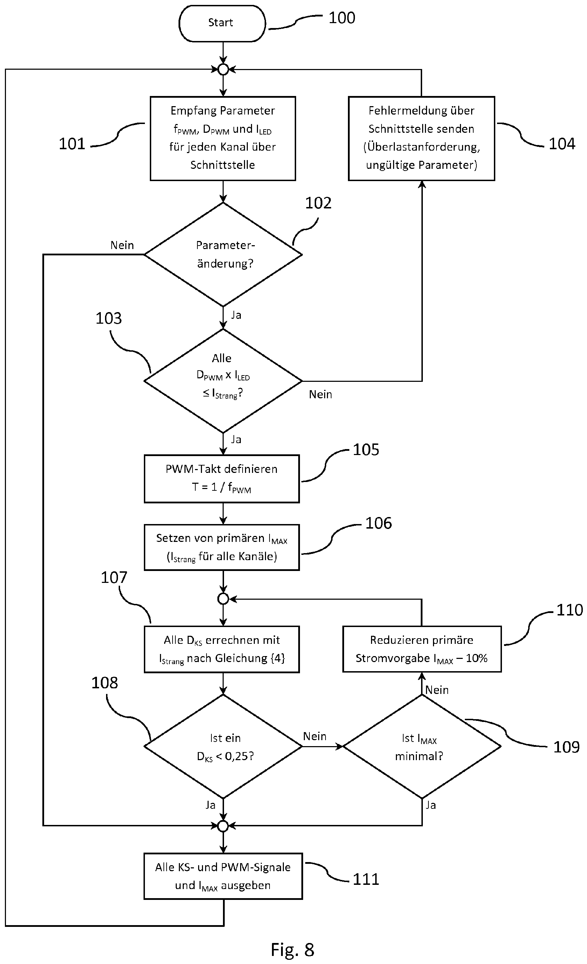

Um die von der Stromquelle am Ausgang bereitgestellte elektrische Leistung an den tatsächlichen Bedarf anzupassen, kann z.B. eine Stromregelung durchgeführt werden. Wenn die an einem Ausgang CH1 bis CHn verbrauchte elektrische Leistung an keinem der Ausgänge größer ist als ein vorgegebener Wert, wie z.B. 80% der für den jeweiligen Kanal bereitgestellten Leistung, wird der in der Primärwickelung fließende Strom 35 vorzugsweise reduziert. Zur Überwachung des Leistungsbedarfs an den einzelnen Ausgängen CH1 bis CHn kann beispielsweise das Tastverhältnis $D_{KS}$ der einzelnen Kanäle überwacht werden, wie im Folgenden noch anhand von Fig. 8 erläutert werden wird. Zur Durchführung der Stromregelung ist die Steuereinheit 61 hier über eine Schnittstelle 44, wie z.B. einen Optokoppler mit dem Spannungsregler 45 verbunden und gibt diesem einen neuen Strom-Sollwert 43 vor. Dieser wird dann über die vorstehend genannten Einheiten 53, 55, 1 eingestellt.

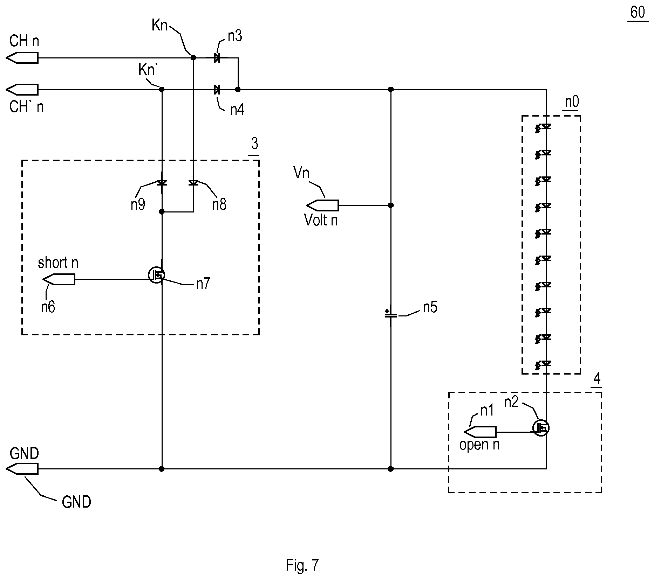

Fig. 7 zeigt einen der Ausgänge CH1-CHn in vergrößerter Darstellung. Eine erste Dimmvorrichtung 3 umfasst jeweils eine Entkoppeldiode n8 und n9, die an den Knoten Kn und Kn' angeschlossen und beide an einem Leistungsanschluss (drain) des Schalters n7 angeschlossen sind (n steht dabei für die Kanalnummer). Die Ausgangsspannung Vn für die Steuereinheit 61 wird direkt am Ausgang CHn abgegriffen. Der Schalter n2 liegt unmittelbar in Reihe vom Minuspol der LED-Last n0 und dem Referenzpunkt GND. Der Schalter n2 wird mittels eines Steuersignals openn von der Steuereinheit 61 angesteuert. Diese Ausgangsschaltung 60 ist für jeden Kanal CH1 bis CHn einmal vorhanden.

Ein Beispiel einer Softwareroutine, wie sie z.B. in einem Mikrocontroller 61 ablaufen kann, ist in Fig. 8 dargestellt. Um das Diagramm nicht zu komplex zu gestalten, wurde auf die oben beschriebene, immer gegenphasige Ansteuerung der beiden Schalter n2,n7 verzichtet.

Nach dem Start (Block 100) der mehrkanaligen Stromquelle 47 werden über die Schnittstelle 64 die erforderlichen Parameter, nämlich die Dimmfrequenz $f_{PWM}$ der Maximalwert $I_{led}$ des Ausgangsstroms und das Tastverhältnis $D_{PWM}$ der zweiten Dimmvorrichtung eingelesen. Haben sich gegenüber der letzten Datenübertragung keine Parameter geändert, kann alles beibehalten und direkt zum letzten Schritt 111 gesprungen werden. Ergibt sich in der Abfrage 102 jedoch eine Parameteränderung, wird als nächster Schritt 103 überprüft, ob sich alle Parameter im gültigen Bereich befinden. Konkret wird hier abgefragt, ob in keinem Kanal ein maximaler Stromwert überschritten wird. Falls dies doch der Fall ist, wird in Schritt 104 eine Fehlermeldung über die Schnittstelle 64 an das übergeordnete System gesendet.

Danach geht es wieder zurück zum Einlesevorgang 101. Sind dagegen alle Parameter gültig, wird zunächst die Frequenzinformation $f_{PWM}$ verarbeitet (Schritt 105). Dabei ist der Kehrwert der Frequenz $f_{PWM}$ die Zeitbasis für die Ausgabe der Steuersignale shortn für die Schalter der ersten Dimmvorrichtung 3 und der Steuersignale openn für die Schalter der zweiten Dimmvorrichtung 4. Danach wird der geräteinterne Parameter $I_{Max}$ für die primäre Gesamtstromvorgabe und damit auch $I_{Strang}$ für jeden Kanal CH1 bis CHn auf den maximal möglichen Wert gesetzt (Schritt 106). Diese Werte sind durch die Dimensionierung des Primärteils 1, das Übersetzungsverhältnis des Transformators 30 und die Auslegung der Teilerstufe 2 vorgegeben. Dann wird aus den für den Kanal CH1 bis CHn gegebenen Parametern $I_{led}$, $D_{PWM}$ und $I_{Strang}$ nach Gleichung (4) das notwendige Tastverhältnis $D_{KS}$ des Kurzschlussschalters n7 in Schritt 107 ermittelt. Die nachfolgende Abfrage 108 stellt fest, ob ein Kanal schon im oberen Bereich, z.B. größer als 75% des maximalen Ausgangsstroms In betrieben wird. Dieser Grenzwert kann natürlich auch größer oder kleiner sein, je nachdem welche dynamischen Anforderungen an das Gesamtsystem gestellt werden. Wenn der vorgegebene Grenzwert an keinem Kanal überschritten wird, d.h. keiner der Kanäle arbeitet nahe seiner Leistungsgrenze, wird die Stromvorgabe reduziert. Dabei wird zunächst in Schritt 109 überprüft, ob der Primärstrom 35 nicht bereits am systembedingt vorgegebenen Minimum liegt. Dies kann beispielsweise 5% oder 10% des Maximalwerts sein und ist auch von der Dimensionierung der Primärstufe 1 abhängig. Wenn dies der Fall ist, wird zu Schritt 111 weitergegangen, da sich der Primärstrom 35 nicht weiter reduzieren lässt.

Ist die Abfrage von Schritt 109 dagegen negativ, wird der Primärstrom 35 vorzugsweise um einen vorgegebenen Wert z.B. 10%, reduziert. Der neue Strom $I_{Max}$ bildet dabei auch die Referenz für den neuen maximal möglichen Strom $I_{Strang}$ für jeden Kanal CHn. Mit den angepassten Stromwerten $I_{Strang}$ für jeden Kanal CH1 bis CHn werden dann wiederum neue Tastverhältnisse $D_{KS}$ für jeden Kanal in Schritt 108 ermittelt. Nach mehrmaligem Durchlauf der Schleife kann der Primärstrom nicht weiter verringert werden oder ein Kanal befindet sich nun nahe der Leistungsgrenze und das Verfahren geht weiter zu Schritt 111. In diesem Schritt werden nun alle Schalter der ersten und zweiten Dimmvorrichtungen 3,4 mit den zuvor ermittelten Signalen angesteuert. Danach geht es zurück zum Einlesen der Parameter in Schritt 101.

Die Stromquelle 47 könnte wahlweise auch mit einem Farbsensor ausgestattet sein. Bei einer Abweichung der dargestellten Farbe von einem vorgegebenen Sollwert können die Schalter der einzelnen Dimmvorrichtungen dann automatisch entsprechend angesteuert werden, um eine Farbabweichung auszuregeln. In diesem Fall wäre auch noch ein entsprechender Regler vorzusehen.

**Patentansprüche**

1. Stromquelle (47) mit mehreren Ausgängen (CH1, CH2), die an jedem Ausgang (CH1, CH2) einen Gleichstrom (I1, I2) zum Betreiben einer elektrischen Last (10, 20) bereitstellt, wobei die Stromquelle (47) einen Stromteiler (2) umfasst, der den von einer Stromversorgung (1, 30) bereitgestellten Strom (I01, I02) auf die einzelnen Ausgänge (CH1, CH2) verteilt, wobei an jedem Ausgang eine zweite Dimmvorrichtung (4) angeschlossen ist, die jeweils einen zweiten Schalter (12, 22) aufweist, der mittels eines zweiten PWM-Signals (open1, open2) angesteuert wird, **dadurch gekennzeichnet, dass**

   - jeder Ausgang (CH1, CH2) an einer separaten ersten Dimmvorrichtung (3) angeschlossen ist, mit der ein Teil des zum Ausgang fließenden Stroms (I1', I2) gegen ein Referenzpotential (GND) abgeleitet werden kann, und die jeweils einen ersten Schalter (17, 27) umfasst, der mittels eines ersten PWM-Signals (short1, short2) angesteuert wird, so dass jeder Ausgang (CH1, CH2) mit Hilfe seiner ersten als auch seiner zweiten Dimmvorrichtung (3, 4) individuell dimmbar ist, und dass

   - die Stromquelle (47) ferner eine Steuereinheit (61) aufweist, die jeweils das Tastverhältnis des ersten PWM-Signals (short1, short2) und des zweiten PWM-Signals (open1, open2) so einstellt, dass der vorgegebene Maximalwert ($I_{LED}$) des durch die Last (10, 20) fließenden, pulsweitenmodulierten Stroms (I1, I2) im Wesentlichen konstant bleibt, wenn der zugehörige Ausgang (CH1,CH2) gedimmt wird.

2. Stromquelle (47) nach Anspruch 1, **dadurch gekennzeichnet, dass** der zweite Schalter (12,22) in Serie zur elektrischen Last (10,20) geschaltet ist.

3. Stromquelle (47) nach Anspruch 1 oder 2, **dadurch gekennzeichnet, dass** die Steuereinheit (61) in Abhängigkeit von der Dimmeinstellung (66) ein Tastverhältnis ($D_{PWM}$, $D_{KS}$) des ersten oder zweiten PWM-Signals (short1, short2, open1, open2) ermittelt.

4. Stromquelle (47) nach Anspruch 3, **dadurch gekennzeichnet, dass** die Steuereinheit (61) das Tastverhältnis ($D_{PWM}$, $D_{KS}$) des ersten oder zweiten PWM-Signals auf Basis folgender Gleichung ermittelt:

$$(1-D_{KS}) \times I_{Strang} = D_{PWM} \times I_{LED}$$

wobei $I_{Strang}$ der Maximalwert des von der Stromquelle (47) an einem Ausgang (CH1, CH2) bereitgestellten Stroms,

$D_{KS}$ das Tastverhältnis des ersten PWM-Signals,

$D_{PWM}$ das Tastverhältnis des zweiten PWM-Signals, und

$I_{LED}$ der Maximalwert des durch eine am Ausgang (CH1, CH2) angeschlossene Last (10, 20) fließenden, pulsweitenmodulierten Stroms ist.

5. Stromquelle (47) nach einem der vorhergehenden Ansprüche, **dadurch gekennzeichnet, dass** die Steuereinheit (61) die Schalter (17, 27, 12, 22) wenigstens teilweise gegenphasig ansteuert.

6. Stromquelle (47) nach einem der vorhergehenden Ansprüche, **dadurch gekennzeichnet, dass** an den Ausgängen (CH1, CH2) Leuchtmittel (10, 20) und insbesondere LEDs unterschiedlicher Farben und/oder weiße LEDs unterschiedlicher Farbtemperatur angeschlossen sind.

7. Stromquelle (47) nach einem der vorhergehenden Ansprüche, **dadurch gekennzeichnet, dass** in einer zu einem Ausgang (CH1, CH2) führenden Leitung (70-73), in der die Stromquelle einen vorgegebenen Strom (I01', I01", I02', I02") bereitstellt, ein Knoten (K1, K1', K2, K2') vorgesehen ist, an dem die erste Dimmvorrichtung (3) angeschlossen ist.

8. Stromquelle (47) nach einem der Ansprüche 1 bis 4, **dadurch gekennzeichnet, dass** die Steuereinheit (61) mit einem Regler (45) verbunden ist, der den von der Stromquelle (47) primärseitig aufgenommenen Strom oder eine davon abhängige Größe regelt, dass die an den einzelnen Ausgängen (CH1, CH2) bereitgestellte elektrische Leistung oder eine dazu äquivalente Größe, wie z.B. ein Tastverhältnis ($D_{KS}$) des ersten PWM-Signals (short1, short2), ermittelt wird, und dass die Steuereinheit (61) dem Regler (45) in Abhängigkeit von der ermittelten Größe einen Sollwert ($I_{Setpoint}$) vorgibt.

9. Stromquelle (47) nach Anspruch 8, **dadurch gekennzeichnet, dass** der Stromregler (45) mit nur einem Stromsteller (1) verbunden ist, mittels dessen ein primärseitig in die Stromquelle (47) eingespeister Strom eingestellt werden kann.

10. Stromquelle (47) nach einem der vorhergehenden Ansprüche, **dadurch gekennzeichnet, dass** für jeden Ausgang ein Zweiweggleichrichter (13, 14, bzw. 23, 24) vorgesehen ist.

11. Stromquelle (47) nach einem der vorhergehenden Ansprüche, **dadurch gekennzeichnet, dass** für jeden Ausgang (CH1, CH2) ein Filter (15, 25) zum Filtern und Glätten des Ausgangsstroms (I1, I2) vorgesehen ist.

12. Stromquelle (47) nach Anspruch 11, **dadurch gekennzeichnet, dass** der Filter einen Kondensator (15, 25) umfasst.

13. Stromquelle (47) nach einem der vorhergehenden Ansprüche,
**gekennzeichnet durch**

- einen Haupttransformator (30) mit wenigstens zwei Sekundärwicklungen (32, 34), der von einem Wechselstrom mit einer vorgegebenen Frequenz gespeist wird,
- wenigstens einen sekundärseitigen ersten Schaltungszweig (36), in dem während der positiven Halbwelle, und einen sekundärseitigen zweiten Schaltungszweig (38), in dem während der negativen Halbwelle des Speisestroms ein Strom getrieben wird, wobei
- der erste und der zweite Schaltungszweig (36, 38) jeweils ein zueinander gegensinnig gewickeltes und magnetisch zusammenwirkendes Drosselpaar (40, 50) aufweist,
- wobei eine erste Drossel eines Drosselpaares (40, 50) mit einem ersten Ausgang (CH1) und eine zweite Drossel (42) desselben Drosselpaares (40) mit einem zweiten Ausgang (CH2) verbunden ist, und
- wobei die Drosseln (41, 42, 51, 52) des ersten und zweiten Drosselpaares (40, 50) magnetisch miteinander gekoppelt sind.

**Claims**

1.  Current source (47) having several outputs (CH1, CH2), which provides a constant current (I1, I2) for operating an electrical load (10, 20) at each output (CH1, CH2), the current source (47) comprising a current divider (2) which splits up the current provided by a current supply (1, 30) between the individual outputs (CH1, CH2), wherein a second dimming device (4) having a second switch (12, 22), which is controlled by a second PWM signal (open1, open2) is connected to each of the outputs,
    **characterized in that**

    - each output (CH1, CH2) is connected to a separate first dimming device (3) by means of which a part of the current (I1', I2') flowing to the respective output can be conducted to a reference potential (GND) and which comprises a first switch (17, 27) that is controlled by a first PWM signal (short1, short2) so that each output (CH1, CH2) can be individually dimmed with the help of its associated first and second dimming device (3, 4), and **in that**
    - the current source (47) further comprises a control unit (61) which controls the duty cycle of the first PWM signal (short1, short2) and the second PWM signal (open1, open2) so that the maximum value ($I_{LED}$) of the pulse-width-modulated current (I1, I2) flowing through the load (10, 20) remains essentially constant when the associated output (CH1, CH2) is dimmed.

2.  Current source (47) according to claim 1, wherein the second switch (12, 22) is connected in series to the electrical load (10, 20).

3.  Current source (47) according to claim 1 or 2, wherein the control unit (61) determines a duty factor ($D_{PWM}$, $D_{KS}$) of the first or second PWM signal (short1, short2, open1, open2) depending on a dimmer setting (66).

4.  Current source (47) according to claim 3, wherein the control unit (61) determines the duty factor ($D_{PWM}$, $D_{KS}$) of the first or second PWM-signal based on the following equation:

$$(1-D_{KS}) \times I_{string} = D_{PWM} \times I_{LED}$$

    wherein $I_{string}$ is the maximum value of the current generated by the current source (47) at an output (CH1, CH2), $D_{KS}$ the duty factor of the first PWM signal,
    $D_{PWM}$ the duty factor of the second PWM signal, and
    $I_{LED}$ the maximum value of the pulse-width-modulated current flowing through a load (10, 20) connected to an output (CH1, CH2).

5.  Current source (47) according to one of the preceding claims, wherein the control unit (61) controls the switches (17, 27, 12, 22) at least partially out of phase.

6.  Current source (47) according to one of the preceding claims, wherein there are lamps (10, 20) connected to the outputs (CH1, CH2), and in particular LEDs of various colours and/or white LEDs of various colour temperatures.

7.  Current source (47) according to one of the preceding claims, wherein in a wire (70-73) leading to an output (CH1, CH2), in which the current source provides a predetermined current (I01', I01", I02', I02"), a node (K1, K1', K2, K2') is provided, to which the first dimming device (3) is connected.

8.  Current source (47) according to one of the claim 1 to 4, wherein the control unit (61) is connected to a regulator (45) that regulates a current which is drawn at the primary side of the current source (47) or a quantity depending thereof, wherein the electrical power provided at the individual outputs (CH1, CH2), or a quantity equivalent to it like e.g. a duty factor ($D_{KS}$) of the first PWM signals (short1, short2), is determined, and wherein the control unit (61) assigns a set-point ($I_{Setpoint}$) to the regulator (45) depending on the determined quantities.

9.  Current source (47) according to claim 8, wherein the current regulator (45) is connected to only one current modulator (1), by means of which a current supplied to the primary side of the current source (47) can be set.

10. Current source (47) according to one of the preceding claims, wherein for every output a full-wave rectifier (13, 14, or 23, 24 respectively) is provided.

**11.** Current source (47) according to one of the preceding claims, wherein for every output (CH1, CH2) a filter (15, 25) is provided for filtering and smoothing the output current (I1, I2).

**12.** Current source (47) according to claim 11, wherein the filter comprises a capacitor (15, 25).

**13.** Current source (47) according to one of the preceding claims, **characterised by**:

- a main transformer (30) with at least two secondary coils (32, 34), which is supplied by an alternating current having a predetermined frequency,
- at least one first branch (36) on the secondary side, in which current is supplied during the positive half-wave, and a second branch (38) on the secondary side, in which current is supplied during the negative half-wave of the supply current, wherein
- the first and the second branch (36, 38) each have a pair of inductors (40, 50) which are wound in opposite directions to each other and are magnetically coupled; and
- wherein a first inductor of an inductor pair (40, 50) is connected to a first output (CH1) and a second inductor (42) of the same inductor pair (40) is connected to a second output (CH2),
- wherein the inductors (41, 42, 51, 52) of the first and second inductor pair (40, 50) are magnetically coupled.

**Revendications**

**1.** Source de courant (47) présentant plusieurs sorties (CH1, CH2) et fournissant, au niveau de chaque sortie (CH1, CH2), un courant continu (I1, I2) destiné à alimenter une charge électrique (10, 20), ladite source de courant (47) comprenant un diviseur de courant (2) qui répartit le courant (I01, I02) fourni par une alimentation électrique (1, 30) vers les différentes sorties (CH1, CH2), un deuxième dispositif de gradation de lumière (4) étant branché à chaque sortie, chaque dispositif comportant un deuxième interrupteur (12, 22) qui est commandé au moyen d'un deuxième signal PWM (open1, open2) ;
**caractérisée en ce que**

- chaque sortie (CH1, CH2) est branchée à un premier dispositif de gradation de lumière (3) séparé, avec lequel une partie du courant circulant vers la sortie (I1', I2') peut être dérivée contre un potentiel de référence (GND), et qui comprend respectivement un premier interrupteur (17, 27) commandé au moyen d'un premier signal PWM (short1, short2), de manière que chaque sortie (CH1, CH2) est individuellement réglable en intensité à l'aide de son premier ainsi que de son deuxième dispositif de gradation de lumière (3, 4),

et **en ce que**

- la source de courant (47) présente en outre une unité de commande (61) qui règle le rapport cyclique respectivement du premier signal PWM (short1, short2) et du deuxième signal PWM (open1, open2) de manière que la valeur maximale prédéterminée ($I_{LED}$) du courant modulé en largeur d'impulsion (I1, I2) circulant à travers la charge (10, 20) demeure sensiblement constante lorsque la sortie correspondante (CH1, CH2) est réglée en intensité.

**2.** Source de courant (47) selon la revendication 1, **caractérisée en ce que** le deuxième interrupteur (12, 22) est branché en série à la charge électrique (10, 20).

**3.** Source de courant (47) selon la revendication 1 ou 2, **caractérisée en ce que** l'unité de commande (61) détermine, compte tenu du réglage en intensité (66), un rapport cyclique ($D_{PWM}$, $D_{KS}$) du premier ou deuxième signal PWM (short1, short2, open1, open2).

**4.** Source de courant (47) selon la revendication 3, **caractérisée en ce que** l'unité de commande (61) détermine le rapport cyclique ($D_{PWM}$, $D_{KS}$) du premier ou deuxième signal PWM en fonction de l'équation suivante :

$$(1-D_{KS}) \times I_{Strang} = D_{PWM} \times I_{LED}$$

où $I_{Strang}$ représente la valeur maximale du courant fourni par la source de courant (47) au niveau d'une sortie (CH1, CH2),

$D_{KS}$ représente le rapport cyclique du premier signal PWM,

$D_{PWM}$ représente le rapport cyclique du deuxième signal PWM, et

$I_{LED}$ représente la valeur maximale du courant modulé en largeur d'impulsion circulant à travers une charge (10, 20) branchée à la sortie (CH1, CH2).

**5.** Source de courant (47) selon l'une des revendications précédentes, **caractérisée en ce que** l'unité de commande (61) commande les interrupteurs (17, 27, 12, 22) au moins en partie en opposition de phase.

**6.** Source de courant (47) selon l'une des revendications précédentes, **caractérisée en ce que** des moyens d'éclairage (10, 20), et en particulier des DEL de différentes couleurs et/ou des DEL blanches de différentes températures de couleur, sont branchés aux sorties (CH1, CH2).

**7.** Source de courant (47) selon l'une des revendications précédentes, **caractérisée en ce qu'**un noeud (K1, K1', K2, K2'), auquel le premier dispositif de gradation de lumière (3) est branché, est situé sur une ligne (70-73) menant à une sortie (CH1, CH2) et alimentée en un courant prédéterminé (I01', I01", I02', I02") par la source de courant.

**8.** Source de courant (47) selon l'une des revendications 1 à 4, **caractérisée en ce que** l'unité de commande (61) est reliée à un régulateur (45) qui régule le courant absorbé côté primaire par la source de courant (47) ou une grandeur dépendant de celui-ci, **en ce que** l'énergie électrique fournie au niveau de chacune des sorties (CH1, CH2) ou une grandeur équivalente à celle-ci, par exemple un rapport cyclique ($D_{KS}$) du premier signal PWM (short1, short2), est déterminée, et **en ce que** l'unité de commande (61) fixe une valeur de consigne ($I_{Setpoint}$) pour le régulateur (45) en fonction de la grandeur déterminée.

**9.** Source de courant (47) selon la revendication 8, **caractérisée en ce que** le régulateur de courant (45) est uniquement relié à un variateur de courant (1) permettant de régler le courant injecté côté primaire dans la source de courant (47).

**10.** Source de courant (47) selon l'une des revendications précédentes, **caractérisée en ce qu'**un redresseur bidirectionnel (13, 14, ou 23, 24) est prévu pour chaque sortie.

**11.** Source de courant (47) selon l'une des revendications précédentes, **caractérisée en ce qu'**un filtre (15, 25) est prévu pour chaque sortie (CH1, CH2) en vue du filtrage et du lissage du courant de sortie (I1, I2).

**12.** Source de courant (47) selon la revendication 11, **caractérisée en ce que** le filtre comprend un condensateur (15, 25).

**13.** Source de courant (47) selon l'une des revendications précédentes, **caractérisée par**

- un transformateur principal (30) présentant au moins deux enroulements secondaires (32, 34) et alimenté en un courant alternatif de fréquence prédéterminée, et
- au moins une première branche de circuit côté secondaire (36), dans laquelle un courant est créé pendant la demi-onde positive du courant d'alimentation, et une deuxième branche de circuit côté secondaire (38), dans laquelle un courant est créé pendant la demi-onde négative du courant d'alimentation ; dans laquelle
- les première et deuxième branches de circuit (36, 38) présentent chacune une paire de selfs (40, 50) bobinés en sens inverses et coopérant magnétiquement,
- un premier self d'une paire de selfs (40, 50) est branché à une première sortie (CH1) et un deuxième self (42) de la même paire de selfs (40) est branché à une deuxième sortie (CH2), et
- les selfs (41, 42, 51, 52) des première et deuxième paires de selfs (40, 50) sont couplés magnétiquement entre eux.

Fig. 1a

Fig. 1b

Fig. 2

Fig. 3

Fig. 4

EP 2 712 273 B1

Spitzenwert
Mittelwert
Minimalwert
Spannung CH1

EIN
AUS
short1 [16]
$I_{Strang}$
0
I 1``

$I_{Strang}$
$I_{DC}$
0
I 1`

EIN
AUS
open1 [11]
$I_{LED}$
$I_{DC}$
0
I 1

gleich

eingespeister
Anteil I 01`

eingespeister
Anteil I 02`

t0  t1  t2  t3  t4  t5  t6  t7  t

18

Fig. 5

EP 2 712 273 B1

19

Spitzenwert
Mittelwert
Minimalwert

Spannung CH1

EIN
short1 [16]
AUS

$I_{Strang}$
I 1``
0

$I_{Strang}$
$I_{DC}$
I 1`
0

EIN
open1 [11]
AUS

$I_{LED}$
$I_{DC}$
I 1
0

gleich

t0  t1  t2  t3  t4  t5  t6  t7  t

eingespeister
Anteil I 01`

eingespeister
Anteil I 02`

FIG. 6

Fig. 7

Start — 100

Empfang Parameter
$f_{PWM}$, $D_{PWM}$ und $I_{LED}$
für jeden Kanal über
Schnittstelle
— 101

Fehlermeldung über
Schnittstelle senden
(Überlastanforderung,
ungültige Parameter)
— 104

Parameteränderung?
— 102
Nein
Ja

Alle
$D_{PWM}$ x $I_{LED}$
$\leq I_{Strang}$?
— 103
Nein
Ja

PWM-Takt definieren
$T = 1 / f_{PWM}$
— 105

Setzen von primären $I_{MAX}$
($I_{Strang}$ für alle Kanäle)
— 106

Alle $D_{KS}$ errechnen mit
$I_{Strang}$ nach Gleichung {4}
— 107

Reduzieren primäre
Stromvorgabe $I_{MAX} - 10\%$
— 110

Ist ein
$D_{KS} < 0,25$?
— 108
Nein
Ja

Ist $I_{MAX}$
minimal?
— 109
Nein
Ja

Alle KS- und PWM-Signale
und $I_{MAX}$ ausgeben
— 111

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7659673 B2
- DE 102010048951 A1
- WO 2007039862 A2
- EP 0788850 B1
- US 2012098442 A1
- DE 102005056338 A1
- US 8044609 B2
- DE 102010031236 A1
- US 20120200229 A1
- US 20060255753 A1
- US 2010016440 A1
- WO 2011047817 A9